# FASCICULE DE BREVET EUROPEEN

(11) **EP 3 340 793 B1**
(45) Date de publication et mention de la délivrance du brevet: **25.10.2023**
(21) Numéro de dépôt: 16767324.3
(22) Date de dépôt: 11.08.2016
(51) Int. Cl.: A01N 31/06, A01N 65/22, A01N 25/04, A01N 25/28, A01P 17/00

(54) **COMPOSITION RÉPULSIVE CONTRE LES INSECTES VECTEURS DE MALADIES TROPICALES SOUS FORME DE SPRAY**
VERTREIBZUSAMMENSETZUNG IN SPRAY-FORM GEGEN VEKTORINSEKTEN VON TROPISCHEN KRANKHEITEN
REPELLING SPRAY COMPOSITION AGAINST VECTOR INSECTS OF TROPICAL DISEASES

(30) Priorité: 25.08.2015 FR 1557908
(43) Date de publication de la demande: 04.07.2018
(73) Titulaire: Armonie Sante, 97436 Saint-Leu (FR)
(72) Inventeur: TORTILLARD, David, 97436 Saint-Leu (FR)
(74) Mandataire: Germain Maureau
(86) Numéro de dépôt international: PCT/FR2016/052065
(87) Numéro de publication internationale: WO 2017/032941

(56) Documents cités:
- WO-A1-2007/085856
- US-A1- 2009 010 977
- US-A1- 2009 186 096

## Description

La présente invention concerne des compositions répulsives sous forme de spray contre des insectes vecteurs de maladies tropicales qui sont destinées à traiter des matériaux textiles.

Le centre européen pour la prévention et le contrôle des maladies (abrégé « ECDC ») estime à près d'un milliard le nombre de victimes de maladies transmises par la salive du moustique. On évalue qu'environ 700 000 décès par an à travers le monde ont pour cause les moustiques qui sont des vecteurs de maladies tropicales. En effet, 5% des espèces de moustiques parmi les 3 000 recensées sont porteuses de pathogènes dangereux pour l'homme tels que la dengue, le chikungunya et le paludisme (ou malaria).

La dengue ou la fièvre jaune sont des maladies transmises par les moustiques du genre *Aedes.* L'Organisation Mondiale pour la Santé (abrégé « OMS) a constaté ces dernières années une recrudescence du virus de la dengue, auquel est exposée plus de 40% de la population mondiale. Le paludisme est transmis par les moustiques du genre *Anapholes.* Ces moustiques sont majoritairement présents dans les zones tropicales et subtropicales.

L'augmentation de ces maladies tropicales est à mettre en rapport avec la propagation croissante des moustiques de genre *Aedes aegypti* et *Aedes albopictus* (moustique-tigre), espèce très invasive également porteuse de chikungunya.

La progression du moustique *Aedes* en Europe a causé l'apparition des premiers cas de chikungunya en 2007 dans la région de Ravenne en Italie, alors même que ce virus se concentrait principalement sur certaines régions d'Afrique, d'Asie du Sud-est et du sous-continent indien. Depuis, le moustique-tigre s'implante chaque année plus profondément en Europe et fait l'objet d'une surveillance accrue par les autorités sanitaires.

Parmi l'ensemble des moyens mis en oeuvre pour lutter contre ces maladies tropicales vectorisées par des insectes tels que les moustiques, la protection par effet répulsif constitue une stratégie de choix. En effet, la répulsion permet d'éviter les piqûres de ces insectes, et ainsi la prolifération des maladies tropicales précitées. C'est pourquoi, il existe un besoin constant d'amélioration des compositions répulsives contre les insectes vecteurs de maladies tropicales.

Les compositions répulsives peuvent se présenter sous différentes formes telles que les sprays, les lotions, les lingettes et les sticks pour une application sur la peau afin de la protéger des insectes porteurs de maladies tropicales.

Il est aussi connu d'imprégner des matériaux textiles (par exemples vêtements, literie, moustiquaires, tissus d'ameublement) de compositions répulsives afin de pouvoir se protéger contre les insectes vecteurs de maladies tropicales :
- soit par le port du vêtement traité,
- soit par la protection de son environnement grâce à une moustiquaire ou à une literie ou un tissu d'ameublement traité.

C'est pourquoi, différents traitements de matériaux textiles ont été développés afin de leur conférer des propriétés répulsives contres des insectes vecteurs de maladies tropicales. Ces traitements consistent en une imprégnation du matériau textile avec une composition répulsive pouvant, par exemple, se présenter sous la forme d'un spray qui contient des principes actifs répulsifs.

Les compositions répulsives sous forme de spray connues comprennent souvent des principes actifs répulsifs tels que la perméthrine ou des huiles essentielles qui sont solubilisés dans une solution.

Cependant, l'effet de ces traitements consistant en la pulvérisation de telles compositions répulsives sur un matériau textile est généralement de très courte durée de l'ordre de 4 à 8 heures après son application, et ce quel que soit l'usage du matériau textile (porter ou même stockage avant son utilisation).

De plus, très peu de principes actifs présentent des propriétés répulsives satisfaisantes contre les insectes vecteurs de maladies tropicales tels que les moustiques. US 2009/010977 A1 décrit des nanocapsules de répulsifs. WO 2007/085856 A1 et US 2009/186096 A1 décrivent respectivement les propriétés répulsives du p-menthane -3,8-diol et du lavandin.

La présente invention remédie à l'ensemble de ces inconvénients en proposant une nouvelle composition répulsive contre des insectes vecteurs de maladies tropicales tels que les moustiques sous la forme d'un spray et qui est destinée à imprégner un matériau textile pour lui conférer un effet répulsif parfaitement efficace et durable au cours du temps.

Les inventeurs de la présente invention ont en effet mis au point une nouvelle composition répulsive sous la forme de spray en choisissant des principes actifs répulsifs spécifiques et qui sont en outre micro-encapsulés de telle sorte qu'ils sont relargués de manière progressive au cours du temps, de manière à accroître la durée de protection du matériau textile par rapport à celle de matériaux textiles imprégnés d'autres compositions répulsives sous forme de spray.

Plus précisément, les microcapsules de la composition répulsive selon l'invention comprennent un noyau contenant au moins lesdits principes actifs répulsifs, ledit noyau étant enrobé d'une membrane.

Ainsi, la présente invention a pour premier objet une composition répulsive contre des insectes vecteurs d'une maladie tropicale tels que les moustiques sous forme de spray qui comprend au moins :
- des microcapsules comprenant un noyau enrobé d'une membrane, ledit noyau contenant au moins des principes actifs répulsifs qui comprennent au moins de l'huile essentielle de lavandin et du p-menthane-3,8-diol ;
- au moins un agent liant;
- au moins un agent mouillant ;
- de l'eau.

La micro-encapsulation des principes actifs répulsifs précités présente les avantages de les protéger grâce à la membrane et de ne les libérer que lors de l'éclatement de celle-ci. C'est pourquoi, lesdits principes actifs encapsulés conservent leurs propriétés répulsives durant de longues périodes.

La libération des principes actifs que contient le noyau des microcapsules est réalisée par rupture de la membrane des microcapsules suite à un processus mécanique tel qu'un frottement, une friction, un cisaillement, un grattage. Par exemple, il peut s'agir d'un frottement créé lors du port du vêtement traité avec la composition répulsive ou d'une pièce de literie et de leur contact avec la peau ou bien d'un frottement du matériau textile traité sur toute surface de contact (par exemple un meuble, la peau).

Les matériaux textiles traités avec la composition répulsive selon l'invention présentent un effet répulsif durable contre les insectes vecteurs de maladies tropicales, et ce même après plusieurs années de stockage (au moins 3 ans) s'il n'y a pas eu rupture des membranes des microcapsules par un processus mécanique tel que détaillé ci-dessus.

De plus, la micro-encapsulation permet la fixation des principes actifs répulsifs sur le matériau textile par l'intermédiaire des microcapsules.

En outre, du fait de leur microencapsulation, les principes actifs répulsifs que contient la composition répulsive selon l'invention présentent l'avantage d'être protégés contre les influences extérieures nuisibles telles que la lumière, les bactéries, les modifications chimiques de l'environnement (par exemple pH, présence d'eau).

Dans le cadre de la présente invention, par « agent liant », on entend un agent qui permet une accroche des microcapsules sur le matériau textile. De tels agents liants de microcapsules sur un matériau textile sont parfaitement à la portée de l'homme du métier.

Dans le cadre de la présente invention, par « agent mouillant », on entend un agent qui assure la mouillabilité de la composition répulsive sur le matériau textile.

Dans un mode de réalisation de l'invention, les microcapsules comprennent par rapport à la masse totale des principes actifs qu'elles contiennent :
- entre 5 et 50 %, de préférence entre 5 et 10%, en masse d'huile essentielle de lavandin ;
- entre 1 et 95 %, de préférence entre 50 et 95 %, en masse de p-menthane-3,8-diol.

Dans un mode de réalisation de l'invention, le noyau des microcapsules comprend de l'huile essentielle d'eucalyptus citronné. En effet, cette huile essentielle contient du p-menthane-3,8-diol. Ainsi, dans un mode de réalisation de l'invention, le noyau des microcapsules comprend au moins de l'huile essentielle d'eucalyptus citronné et de l'huile essentielle de lavandin.

Dans un mode de réalisation de l'invention, le noyau des microcapsules comprend en outre au moins un composé choisi parmi les parfums, les désodorisants, les hydratants pour la peau, les vitamines, les colorants, les pigments, les antioxydants, les acides, les bases, les agents de blanchiment, les peroxydes, les adhésifs, les catalyseurs, les huiles cosmétiques, les extraits de plantes ou d'algues, les agents adoucissants, les agents hydrofuges, les molécules biocides, les insectifuges, les agents calorifuges, les retardateurs de flamme et les agents bactériostatiques.

Dans un mode de réalisation selon l'invention, le noyau des microcapsules comprend au moins un principe actif parfumé ou désodorisant qui sera avantageusement choisi en fonction de l'utilisation du matériau textile traité.

La membrane des microcapsules est réalisée en au moins un matériau qui peut être choisi parmi la gélatine, le silicone, les polyamides, les polyuréthanes, les polyoléfines, les protéines, les lipides, la cellulose et ses dérivés, les polysaccharides, les chitosans, les résines aminoplastes telles que l'urée-formaldéhyde et la mélamine-formaldéhyde, les gommes, les polyacrylates, les polystyrènes, les gommes et les polyesters.

Par exemple, ledit au moins un matériau de la membrane peut être un polymère choisi parmi des polymères tels que le poly(méthylène urée, le poly(oxyméthylène urée, le poly(oxyméthylène mélamine, les polyols, les poly(vinylalcools, les poly(vinylpyrolidones, les poly(lactic-co-glycolique acide, les polycaprolactones, les gommes telles que les gomme d'acacia, de guar, et arabique, ainsi que les polyméthylméthacrylates.

Les microcapsules peuvent être obtenues à partir de tout procédé parfaitement connu de l'homme du métier, tel qu'un procédé de dispersion hétérogène au cours duquel les principes actifs à encapsuler sont dispersés dans une phase continue (par exemple de l'eau) et le matériau utilisé pour la membrane est dispersé de façon à être à l'interface desdits principes actifs et de la phase continue. Le matériau de la membrane peut, par exemple, être "durci" par réticulation grâce à des conditions appropriées de pH et/ou de température, et éventuellement en présence d'un catalyseur. Ces conditions sont connues de l'homme du métier.

Les microcapsules peuvent aussi être fabriquées à partir d'un procédé de coacervation de la gélatine.

Dans le cadre de l'invention, les microcapsules peuvent être réalisées sous forme de suspension aqueuse. Les microcapsules peuvent par exemple avoir une teneur massique de matières solide comprise entre 15 et 50 % par rapport à leur masse totale.

Dans un mode réalisation de l'invention, la membrane des microcapsules est une résine aminoplaste. Cela signifie que la membrane est à base d'un complexe urée/formaldéhyde ou mélamine/formaldéhyde. Les microcapsules peuvent avoir été fabriquées par polycondensation de l'urée avec le formaldéhyde, de la mélamine (2,4,6-triamino-l,3,5-triazine) avec du formaldéhyde.

Plus précisément, dans ce mode de réalisation, les microcapsules peuvent être obtenues de la manière suivante :
- on prépare un mélange de principes actifs qui comprend au moins de l'huile essentielle de lavandin et du p-menthane-3,8-diol;
- on disperse ce mélange dans une solution aqueuse contenant des précurseurs d'une résine aminoplaste, par exemple un complexe formaldéhyde/urée ou formaldéhyde/mélamine de manière à obtenir une dispersion ;
- on ajoute un catalyseur acide à la dispersion de manière à démarrer la polycondensation des précurseurs d'aminoplastes. Il se forme alors autour des gouttelettes de principes actifs une membrane solide et résistante.

La masse du noyau des microcapsules peut être comprise entre 2% et 98%, de préférence entre 70% et 95%, par rapport à la masse totale desdites microcapsules.

La masse de la membrane des microcapsules peut être comprise entre 2% et 98%, de préférence entre 5% et 30%, par rapport à la masse totale desdites microcapsules.

La taille moyenne des microcapsules peut être comprise entre 1 et 300 µm, de préférence entre 1 et 25 µm. La taille des microcapsules dépend de la contrainte de cisaillement appliquée au mélange lors de la formation de microcapsules.

L'agent liant peut comprendre au moins un composé choisi parmi la cellulose, les dérivés de cellulose tels que les nitrate et les acétates de cellulose, les dérivés cationiques de cellulose tels que ceux commercialisés sous la dénomination commerciale UCARE^{®} par la société Dow, les gommes telles que les gommes d'acacia ou de laque, les gommes quaternisées telles que les gommes quaternisées de guar commercialisée sous la marque commerciale JAGUAR^{®} par la société Rhodia, le polyéthylèneimine, le polyethylèneimine modifié, la gélatine, les hydrolysats de protéines quaternisés, les polymères diallyl diméthyl du chlorure d'ammonium/acrylamide tels que ceux commercialisés sous la dénomination commerciale MERQUAT^{®} par la société Nalco, les copolymères de vinyl-pyrrolidone et de méthacrylate diméthylaminoalkyle quaternisé tels que ceux commercialisés sous la dénomination commerciale GAFQUAT HS 50 et HS 100 par la société ISP, les polymères de polyvinylpyrrolidone et de polyvinylcaprolactame, les protéines et leurs dérivés d'origine animale et végétale, les cires (par exemple les cires d'abeille, de candellila et de carnauba), les chitosans et ses dérivés, les résines (par exemple la résine de shellac), les copolymères de methylether de polyvinyle/annhydride maléique, d'acétate de vinyle/crotonate, de vinyl neodecanoate, de diphényldiisothianate de méthylène saturé, de polyperfluoroperhydrophenanthrene, les polymères d'acrylates et d'acrylamides, les copolymères polyvinylpyrrolidone-vinylacétate.

L'agent liant peut aussi être une dispersion de polymères de polyuréthane ou de copolymères acryliques commercialisés sous la dénomination commerciale ARRISTAN ^{®} par la société CHT/Bezema.

De préférence, l'agent liant est un copolymère de polyvinylpyrrolidone-vinylacétate.

L'agent mouillant peut comprendre au moins un composé choisi parmi les alcools gras éthoxylés ; les éthers d'éthylèneoxyde formés avec les alcools en C10 a C20 tels que le stearylpolyoxyéthylène, l'oleyl-polyoxyethylène; les éthers formés avec les alcoyl-phenols tels que les polyglycol-ethers formés de tert-butyl-, octyl- ou nonyl-phenol; les esters formés avec divers acides organiques tels que l'ester de polyéthylène-glycol de l'acide stéarique ou de l'acide myristique, l'oléate de polyethylene-glycol; les esters de glycerol ; les copolymères d'éthylène-oxyde et de propylène-oxyde; les esters partiels d'acides gras ou oleiques formés avec les anhydrides d'hexitol tels que les esters de sorbitol formés avec l'acide oléique ou l'acide stearique; les glycols tertiaires tels que le 3,6-dimethyl-4-octine-3,6-diol ou le 4,7-dimethyl-5decine-4,7-diol ; les thioethers de polyéthylène-glycol tels que l'ether de dodecine mercaptan ; les amines ethoxylés et/ou propoxylés ; les alkylglucosides ; les amineoxydes cationiques avec une fonction amine ou un sel d'ammonium quaternaire ; les bétaïnes ; les alkyliminodipropionates.

L'agent mouillant peut aussi comprendre au moins un composé choisi parmi les sels d'acides polyacryliques, les sels d'acides lignosulfoniques, les sels d'acides pheénolsulfoniques ou naphltalènesulfoniques, les polycondensats d'oxyde d'éthylène sur des alcools gras ou sur des acides gras ou sur des amines grasses, des phénols substitués (notamment des alkylphénols ou des arylphenols), des sels d'esters d'acides sulfosucciniques, des dérivés de la taurine (par exemple des alkyltaurates), des esters phosphoriques d'alcools ou de phénols polyoxyéthylés, des esters d'acides gras et de polyols, les dérives à fonction sulfates, sulfonates et phosphates des composés précédents.

De préférence, l'agent mouillant est un alcool gras éthoxylé.

La composition répulsive peut en outre comprendre au moins un agent conservateur qui est, de préférence, choisi parmi le phénoxyethanol, l'éthylhexylglycérine, le benzyl alcool, le méthylchloroisothiazolinone, le méthylisothiazolinone, le 2-bromo-2-nitropropane-1,3-diol, le méthylparabène, l'éthylparabène, le diazolidinyl urée, le benzoate de sodium, le sorbate de potassium, 1,3-Bis(hydroxymethyl)-5,5-dimethylimidazolidine-2,4-dione, le méthylchloroisothiazolinone, le méthylisothiazolinone, l'acide benzoïque, l'acide dehydroacetique, le polyamine-propyl-biguanidine et le méthyldibromo glutaronitrile.

La composition répulsive selon l'invention peut comprendre par rapport à la masse totale de ladite composition :
- entre 1 et 30%, de préférence entre 2,5% et 20%, de microcapsules comprenant un noyau enrobé d'une membrane, ledit noyau contenant au moins des principes actifs répulsifs qui comprennent au moins de l'huile essentielle de lavandin et du p-menthane-3,8-diol ;
- entre 0,5% et 50%, de préférence entre 1% et 10%, d'au moins un agent liant ;
- entre 0,1% et 50%, de préférence entre 2% et 20%, d'au moins un agent mouillant ;
- optionnellement entre 0,1% et 10%, de préférence entre 0,1% et 2%, d'au moins un agent conservateur ;
- qsp d'eau.

« Qsp » est l'acronyme de « Quantité suffisante pour » pour signifier que le pourcentage massique d'eau dans la composition est tel qu'additionné aux pourcentages de tous les autres constituants de ladite composition, on obtienne un total de 100%.

Dans le cadre de la présente invention, les insectes vecteurs de maladies tropicales contre lesquels la composition selon l'invention est répulsive peuvent être les moustiques. Par exemple, il peut s'agir des espèces de moustiques suivantes : *Aedes aegypti, Culex pipien, Anopheles gambiae.* La composition répulsive selon l'invention peut aussi être efficace contre les acariens, les poux et les puces de lit.

Dans le cadre de la présente invention, les maladies tropicales peuvent être la dengue, la fièvre jaune, le chikungunya et le paludisme.

La présente invention a aussi pour objet un procédé de traitement répulsif d'insectes vecteurs d'une maladie tropicale d'un matériau textile qui se caractérise en ce qu'on pulvérise sur au moins une partie d'un matériau textile au moins une composition répulsive telle que décrite ci-dessus.

Le matériau textile peut être choisi parmi les matériaux textiles naturels tels que le coton, la plume, le duvet, les matériaux textiles synthétiques tels que les polyesters, le nylon, les acryliques ou encore les matériaux textiles mixtes.

Dans le cadre de la présente invention, on entend par matériau textile, tout matériau textile, choisi par exemple parmi les textiles :
- non tissés (par exemple les feutres),
- tissés (par exemple les tissus chaîne et trame), ou encore
- tricotés (par exemple les mailles),
qui est constitué de fibres, filaments ou de fils, pris seuls ou en mélange de ceux-ci, qui sont d'orgine naturelle ou synthétique ou bien encore un mélange d'origines naturelle et synthétique de ceux-ci.

On entend par :
- fibre, un élément filiforme d'un matériau naturel ou synthétique d'une longueur relativement courte ;
- filament, un élément filiforme d'un matériau naturel ou synthétique d'une longueur infinie ou quasi infinie.
- fil, aussi bien un fil élémentaire, à savoir un assemblage unitaire de fibres résultant par exemple de la filature, qu'un assemblage de fils élémentaires ou de filaments résultant par exemple d'un retordage.

Les fibres peuvent être filées, cardées ou torsadées.

Les fibres, filaments ou fils naturels peuvent avoir une origine naturelle végétale ou animale et ainsi être choisis parmi le coton, la laine, la soie, le jute, le lin, le chanvre et la viscose.

Les fibres, filaments ou fils synthétiques peuvent aussi avoir une origine synthétique et être choisis parmi les polyamides, les aramides, les polyesters, les polyacryl-nitrites, les aramides, le polybenzimidazole, les polyéther-éthercétone, les polysulfures de phénylène, les polyacryliques, les chlorofibres, les polyoléfines comme le polypropylène ou le polyéthylène.

Le matériau textile traité avec la composition répulsive selon l'invention peut être utilisé dans différents domaines tels que :
- la literie (couettes, duvets, oreillers, draps, taies, couvertures) ;
- l'habillement;
- l'ameublement (les moustiquaires, les tapis, les rideaux) ;
- le rangement (housses d'emballage pour les vêtements et les pièces de literie telles que les couettes et les couvertures ou d'ameublement).

Dans un mode de réalisation selon l'invention, on pulvérise entre 0,01 et 5 g/m², de préférence entre 0,01 et 1 g/m², de composition répulsive selon l'invention sur ledit matériau textile.

De manière avantageuse, au cours du procédé de traitement selon l'invention, on pulvérise la composition répulsive telle que décrite ci-dessus de telle sorte que le matériau textile soit imprégné d'au moins 0,11 g/m² de p-menthane-3,8-diol et d'au moins 0,01g/m² d'huile essentielle de lavandin.

La pulvérisation peut être réalisée de manière manuelle ou automatique, par exemple avec un pulvérisateur mécanique, pneumatique, électrique ou encore à air comprimé.

Le procédé de traitement répulsif selon l'invention peut consister en un usage domestique. Par exemple, l'utilisateur pulvérise la composition répulsive sur un vêtement, une pièce de literie ou d'ameublement, une housse de rangement ou bien encore une moustiquaire à protéger des insectes vecteurs de la maladie tropicale.

Dans un autre mode de réalisation, le procédé de traitement répulsif selon l'invention est mis en oeuvre sur une ligne industrielle. La composition répulsive selon l'invention peut ainsi être pulvérisée sur un matériau textile au cours d'un procédé industriel, par exemple un procédé industriel de fabrication de vêtements, pièces de literie ou d'ameublement, housses de rangement ou bien encore des moustiquaires de manière à les traiter avant leur utilisation. Comme expliqué ci-dessus, en l'absence de la rupture des microcapsules (par exemple par un processus mécanique tel qu'un frottement), la composition répulsive selon l'invention présente l'avantage de conserver son effet répulsif pendant plusieurs années (au moins trois ans). Ainsi, des matériaux textiles traités, par exemple au cours de leur procédé de fabrication, avec la composition répulsive selon l'invention pourront être stockés pendant plusieurs années et produire leur effet répulsif contre les insectes vecteurs de maladies tropicales au moment de leur utilisation.

Le matériau textile peut être choisi parmi les vêtements, les pièces de literie ou d'ameublement, les housses de rangement ou encore les moustiquaires.

La présente invention a ainsi pour objet un matériau textile qui a été traité par pulvérisation d'une composition répulsive telle que décrite ci-dessus.

Le matériau textile peut être un matériau textile tel que décrit ci-dessus.

La présente a aussi pour objet un produit qui a été traité par pulvérisation d'une composition répulsive telle que décrite ci-dessus, de préférence selon les quantités telles que décrites ci-dessus. Le produit peut être un produit tel que décrit ci-dessus, par exemple un vêtement, une pièce de literie ou d'ameublement, une housse de rangement ou encore une moustiquaire.

### PARTIE EXPERIMENTALE :

### LE PROTOCOLE EXPERIMENTAL :

Des essais expérimentaux ont été réalisés afin de mesurer l'effet répulsif d'un matériau textile traité avec une composition selon l'invention contre les trois espèces de moustique suivantes:
- *Aedes aegypti ;*
- *Culex pipiens ;*
- *Anopheles gambiae.*

Il s'agissait de femelles âgées entre 5 et 7 jours privées de nourriture de sang 12 heures avant les tests.

Les essais ont été réalisés sur 10 personnes volontaires selon les protocoles expérimentaux suivants :
- Directives pour tester l'efficacité répulsive contre les moustiques sur la peau humaine (WHO/HTM/NTD/WHOPES/2009.4), OMS, 2009 ;
- Tests des directives pour les performances de produit « répulsif d'insectes à appliquer sur la peau humaine » (OPPTS 810.3700), version de juillet 2010, Agence américaine pour la protection de l'environnement.

Les 10 personnes volontaires étaient 5 hommes âgés de 20 à 52 ans et 5 femmes âgées de 24 à 55 ans. La surface testée était l'avant-bras s'étendant du poignet au coude, à savoir une surface moyenne de 600 cm².

La composition répulsive selon l'invention testée comprenait en pourcentages massiques par rapport à la masse totale de ladite composition :
- 5% de microcapsules contenant en masse par rapport à la masse totale desdites capsules :
   - 6,8 % d'huile essentielle de lavandin et 78,2 % de p-menthane-3,8-diol constituant le noyau des microcapsules ;
   - 15% d'une membrane en mélanine formaldéhyde ;
- 3% d'un copolymère de polyvinylpyrrolidone-vinylacétate ;
- 4% d'un alcool gras éthoxylé ;
- 0,5% d'un mélange de deux conservateurs : phenéthyl alcool et éthylhexylglycérine ;
- Qsp d'eau.

Dans une 1^{ière} série de tests, 7,2 g de ladite composition répulsive ont été pulvérisés sur un tee-shirt en coton de taille XL sur toute sa surface sauf à l'intérieur, et ce au moyen de 8 pulvérisations.

Dans une 2^{iéme} série de tests, 9 g de ladite composition répulsive ont été pulvérisés sur un tee-shirt en coton de taille XL sur toute sa surface mais pas à l'intérieur, et ce au moyen de 10 pulvérisations.

Ensuite, le déroulement des tests a été identique pour la 1^{ière} et 2^{ième} séries de tests :
Les tee-shirts ont été frottés 6 fois de haut en bas en utilisant une spatule plate en métal afin de simuler les conditions de frottement lors du port du tee-shirt, et ce de manière à provoquer la rupture des microcapsules et ainsi la libération des principes actifs répulsifs qu'elles contiennent. Le frottement des tee-shirts a été effectué au début de l'essai (à savoir au temps initial), puis après 4 heures, 8 heures et 24 heures.

Les conditions opératoires étaient les suivantes :
Les tests ont été réalisés dans une pièce de surface au sol de 12 m² et de volume de 30 m³. Les conditions de la pièce étaient :
- température de 25 °C +/- 2°C ;
- 65% +/-5% d'humidité relative ;
- sous extraction d'air à 30 m³/h.

Les cages contenant les moustiques avaient pour dimensions 40 cm x 40 cm x 40 cm (soit un volume de 64 000 cm³).

Pendant les tests, les cages ont été maintenues dans les conditions suivantes :
- température de 27 °C +/- 2°C ;
- 70% +/-5% d'humidité relative ;
- Intensité lumineuse de 700 lux.

La quantité de moustiques dans chaque cage étaient de 200 +/- 10 (soit une densité moyenne de 1 moustique pour 320 cm³).

Avant chaque test, les avant-bras des volontaires étaient lavés avec un savon sans odeur, ensuite rincés avec de l'eau puis une solution d'éthanol à 70%, et enfin séchés. Chaque main a été couverte d'un gant en vinyle.

Ensuite, un avant-bras était non recouvert du tee-shirt traité afin de servir de test de contrôle pour vérifier l'attractivité des moustiques pour la peau du volontaire. Il s'agissait de l'avant-bras dit « avant-bras de contrôle ».

L'autre avant-bras était recouvert du tissu du tee-shirt traité de manière parfaitement ajustée (soit sur une surface comprise entre 450 et 600 cm² selon la taille des volontaires). Il s'agissait de l'avant-bras dit « avant-bras de test ».

Les tests ont débuté 30 minutes après la mise en place du tee-shirt sur l'avant-bras et se sont déroulés selon les étapes 1) à 4) suivantes :
1) Les volontaires étaient positionnés en face d'une cage.
2) L'avant-bras de contrôle était inséré dans une cage pendant 30 secondes. Le test était validé seulement s'il y avait au moins 10 atterrissages sur l'avant-bras.
3) Après validation du test de contrôle, l'avant-bras de test (à savoir l'avant-bras recouvert du tee-shirt traité) était inséré dans la cage pendant 3 minutes.
4) Les nombres d'atterrissages et de piqûres de moustiques sur cet avant-bras de test étaient relevés.

Les étapes 1) à 4) ont été ensuite répétées après 4, 8 et 24 heures afin de suivre l'efficacité de la composition répulsive au cours du temps.

Avant chaque test, on refrottait les tee-shirts comme cela a été décrit ci-dessus avec une spatule plate en métal.

Aucun effet secondaire tel qu'oedème ou rougeur excessive n'a été constaté sur les volontaires.

### LES RESULTATS :

Tous les avant-bras de contrôle des 10 volontaires ont prouvé l'attirance naturelle des moustiques pour piquer leur peau. En effet, pour tous les tests réalisés, on a relevé plus de 10 atterrissages de moustiques sur l'avant-bras de contrôle au bout de 30 secondes.

Les tableaux 1 à 6 ci-dessous détaillent pour chacun des volontaires, selon l'espèce de moustique considérée et la série de test (1^{ière} ou 2^{ième} série de test) :
- Le nombre de piqûres de moustiques sur l'avant-bras de test du volontaire, colonne « P » ;
- Le nombre d'atterrissage de moustiques sur l'avant-bras de test du volontaire, colonne « A ».

Dans les tableaux ci-dessous, la mention « stop » signifie que le test a été arrêté dès qu'on avait relevé plus de 2 piqûres de moustiques sur l'avant-bras de test.

**Tableau 1 détaillant les résultats de la 1^{ière} série de tests pour l'espèce de moustique Aedes aegypti**

| **Volontaire** | **T = 0** | | **T= 4 h** | | **T = 8 h** | | **T = 24 h** | |
|---|---|---|---|---|---|---|---|---|
| | **P** | **A** | **P** | **A** | **P** | **A** | **P** | **A** |
| **1** | 0 | 0 | 0 | 0 | 0 | 0 | stop | stop |
| **2** | 0 | 0 | 0 | 0 | 0 | 0 | stop | stop |
| **3** | 0 | 0 | 0 | 0 | 0 | 0 | stop | stop |
| **4** | 0 | 0 | 0 | 1 | 1 | 1 | stop | stop |
| **5** | 0 | 0 | 0 | 0 | 0 | 0 | stop | stop |
| **6** | 0 | 0 | 0 | 0 | 0 | 0 | stop | stop |
| **7** | 0 | 0 | 0 | 0 | 0 | 0 | stop | stop |
| **8** | 0 | 0 | 0 | 0 | 0 | 0 | stop | stop |
| **9** | 0 | 0 | 0 | 0 | 0 | 0 | stop | stop |
| **10** | 0 | 0 | 0 | 1 | 1 | 1 | stop | stop |

**Tableau 2 détaillant les résultats de la 1^{iére} série de tests pour l'espèce de moustique Culex pipiens**

| **Volontaire** | **T = 0** | | **T= 4 h** | | **T = 8 h** | | **T = 24 h** | |
|---|---|---|---|---|---|---|---|---|
| | **P** | **A** | **P** | **A** | **P** | **A** | **P** | **A** |
| **1** | 0 | 0 | 0 | 0 | 0 | 0 | stop | stop |
| **2** | 0 | 0 | 0 | 1 | 1 | 2 | stop | stop |
| **3** | 0 | 0 | 0 | 0 | 0 | 1 | stop | stop |
| **4** | 0 | 0 | 0 | 0 | 0 | 0 | stop | stop |
| **5** | 0 | 0 | 0 | 0 | 0 | 0 | stop | stop |
| **6** | 0 | 0 | 0 | 0 | 0 | 0 | stop | stop |
| **7** | 0 | 0 | 0 | 0 | 1 | 1 | stop | stop |
| **8** | 0 | 0 | 0 | 0 | 1 | 1 | stop | stop |
| **9** | 0 | 0 | 0 | 0 | 0 | 0 | stop | stop |
| **10** | 0 | 0 | 0 | 0 | 0 | 1 | stop | stop |

**Tableau 3 détaillant les résultats de la 1^{ière} série de tests pour l'espèce de moustique Anopheles gambiae**

| **Volontaire** | **T = 0** | | **T= 4 h** | | **T = 8 h** | | **T = 24 h** | |
|---|---|---|---|---|---|---|---|---|
| | **P** | **A** | **P** | **A** | **P** | **A** | **P** | **A** |
| **1** | 0 | 0 | 0 | 0 | 0 | 1 | stop | stop |
| **2** | 0 | 0 | 0 | 0 | 1 | 1 | stop | stop |
| **3** | 0 | 0 | 0 | 0 | 0 | 0 | stop | stop |
| **4** | 0 | 0 | 0 | 0 | 0 | 0 | stop | stop |
| **5** | 0 | 0 | 0 | 1 | 1 | 1 | stop | stop |
| **6** | 0 | 0 | 0 | 0 | 0 | 0 | stop | stop |
| **7** | 0 | 0 | 0 | 0 | 0 | 2 | stop | stop |
| **8** | 0 | 0 | 0 | 0 | 0 | 0 | stop | stop |
| **9** | 0 | 0 | 0 | 0 | 1 | 1 | stop | stop |
| **10** | 0 | 0 | 0 | 0 | 0 | 0 | stop | stop |

**Tableau 4 détaillant les résultats de la -2^{éme} série de tests pour l'espèce de moustique Aedes aegypti**

| **Volontaire** | **T = 0** | | **T= 4 h** | | **T = 8 h** | | **T = 24 h** | |
|---|---|---|---|---|---|---|---|---|
| | **P** | **A** | **P** | **A** | **P** | **A** | **P** | **A** |
| **1** | 0 | 0 | 0 | 0 | 0 | 0 | 0 | 4 |
| **2** | 0 | 0 | 0 | 0 | 0 | 2 | 0 | 0 |
| **3** | 0 | 0 | 0 | 0 | 0 | 0 | 0 | 1 |
| **4** | 0 | 0 | 0 | 0 | 0 | 0 | 0 | 3 |
| **5** | 0 | 0 | 0 | 0 | 0 | 1 | 0 | 2 |
| **6** | 0 | 0 | 0 | 0 | 0 | 0 | 0 | 0 |
| **7** | 0 | 0 | 0 | 1 | 0 | 0 | 0 | 5 |
| **8** | 0 | 0 | 0 | 0 | 0 | 0 | 0 | 1 |
| **9** | 0 | 0 | 0 | 0 | 0 | 2 | 0 | 1 |
| **10** | 0 | 0 | 0 | 0 | 0 | 0 | 0 | 1 |

**Tableau 5 détaillant les résultats de la 2^{iéme} série de tests pour l'espèce de moustique Culex pipiens**

| **Volontaire** | **T = 0** | | **T= 4 h** | | **T = 8 h** | | **T = 24 h** | |
|---|---|---|---|---|---|---|---|---|
| | **P** | **A** | **P** | **A** | **P** | **A** | **P** | **A** |
| **1** | 0 | 0 | 0 | 0 | 0 | 1 | 0 | 3 |
| **2** | 0 | 0 | 0 | 0 | 0 | 1 | 0 | 1 |
| **3** | 0 | 0 | 0 | 0 | 0 | 0 | 0 | 0 |
| **4** | 0 | 0 | 0 | 1 | 0 | 0 | 0 | 1 |
| **5** | 0 | 0 | 0 | 0 | 0 | 0 | 0 | 2 |
| **6** | 0 | 0 | 0 | 0 | 0 | 0 | 0 | 1 |
| **7** | 0 | 0 | 0 | 0 | 0 | 1 | 0 | 2 |
| **8** | 0 | 0 | 0 | 0 | 0 | 0 | 0 | 1 |
| **9** | 0 | 0 | 0 | 0 | 0 | 1 | 0 | 3 |
| **10** | 0 | 0 | 0 | 0 | 0 | 0 | 0 | 1 |

**Tableau 6 détaillant les résultats de la 2^{iéme} série de tests pour l'espèce de moustique Anopheles gambiae**

| **Volontaire** | **T = 0** | | **T= 4 h** | | **T = 8 h** | | **T = 24 h** | |
|---|---|---|---|---|---|---|---|---|
| | **P** | **A** | **P** | **A** | **P** | **A** | **P** | **A** |
| **1** | 0 | 0 | 0 | 0 | 0 | 2 | 0 | 2 |
| **2** | 0 | 0 | 0 | 1 | 0 | 1 | 0 | 0 |
| **3** | 0 | 0 | 0 | 0 | 0 | 0 | 0 | 1 |
| **4** | 0 | 0 | 0 | 0 | 0 | 0 | 0 | 1 |
| **5** | 0 | 0 | 0 | 0 | 0 | 1 | 0 | 1 |
| **6** | 0 | 0 | 0 | 0 | 0 | 0 | 0 | 0 |
| **7** | 0 | 0 | 0 | 0 | 0 | 0 | 0 | 1 |
| **8** | 0 | 0 | 0 | 0 | 0 | 3 | 0 | 4 |
| **9** | 0 | 0 | 0 | 1 | 0 | 1 | 0 | 2 |
| **10** | 0 | 0 | 0 | 0 | 0 | 0 | 0 | 1 |

Au vu des résultats, on relève que la composition répulsive selon l'invention est parfaitement efficace pour traiter un matériau textile afin de lui conférer des propriétés répulsives contre des moustiques, et ce de manière durable.

En effet, pour la 1^{ière} série de tests (à savoir 7,2 g de composition répulsive selon l'invention pulvérisée sur un tee-shirt de taille XL), dans ces conditions de laboratoire, la durée moyenne d'efficacité totale (à savoir aucune piqûre relevée) du tee-shirt traité avec la composition selon répulsive l'invention était de 4 heures, et ce quelle que soit l'espèce de moustique.

Après 8 heures, on constatait quelques piqûres (moins de 2 piqûres).

Après 24 heures, on a relevé un nombre important de piqûres.

La 2^{iéme} série de tests (à savoir 9 g de composition répulsive selon l'invention pulvérisée sur un tee-shirt de taille XL), dans ces conditions de laboratoire, a montré une protection totale contre les moustiques (quelle que soit l'espèce considérée), et ce pendant une durée de 24 heures. Au bout de 24 heures de test, on a relevé quelques atterrissages mais aucune piqûre de moustique.

En outre, une 3^{ième} série de tests a été réalisée afin de mesurer l'effet répulsif d'un matériau textile traité avec une composition dit « comparative » par rapport à la présente invention contre l'espèce de moustique *Aedes aegypti* détaillée ci-dessus. Il s'agissait de femelles âgées entre 5 et 7 jours privées de nourriture de sang 12 heures avant cette 3^{ième} série de tests.

La 3^{ième} série de tests a été réalisée sur 10 personnes volontaires selon les protocoles expérimentaux détaillés ci-dessus.

Les 10 personnes volontaires étaient 5 hommes âgés de 20 à 52 ans et 5 femmes âgées de 24 à 55 ans. La surface testée était l'avant-bras s'étendant du poignet au coude, à savoir une surface moyenne de 600 cm².

La composition répulsive comparative testée comprenait en pourcentages massiques par rapport à la masse totale de ladite composition :
- 5% de microcapsules contenant en masse par rapport à la masse totale desdites capsules :
   - 6,8 % d'huile essentielle de lavandin et 78,2 % d'huile de tournesol constituant le noyau des microcapsules ;
   - 15% d'une membrane en mélanine formaldéhyde ;
- 3% d'un copolymère de polyvinylpyrrolidone-vinylacétate ;
- 4% d'un alcool gras éthoxylé ;
- 0,5% d'un mélange de deux conservateurs : phenéthyl alcool et éthylhexylglycérine ;
- Qsp d'eau.

Ainsi, la composition comparative était dépourvue d'un des principes actifs essentiels de la présente invention qu'est le p-menthane-3,8-diol et a été remplacé par de l'huile de tournesol.

9 g de cette composition répulsive ont été pulvérisés sur un tee-shirt en coton de taille XL sur toute sa surface mais pas à l'intérieur, et ce au moyen de 10 pulvérisations.

Ensuite, le déroulement des tests a été identique à celui détaillé ci-dessus pour les 1^{ière} et 2^{ième} séries de tests.

Aucun effet secondaire tel qu'oedème ou rougeur excessive n'a été constaté sur les volontaires.

Dans le tableau 7 ci-dessous, la mention « stop » signifie que le test a été arrêté dès qu'on avait relevé plus de 2 piqûres de moustiques sur l'avant-bras de test.

**Tableau 7 détaillant les résultats de la 3^{ième} série de tests pour l'espèce de moustique Aedes aegypti**

| **Volontaire** | **T = 0** | | **T= 4 h** | | **T = 8 h** | | **T = 24 h** | |
|---|---|---|---|---|---|---|---|---|
| | **P** | **A** | **P** | **A** | **P** | **A** | **P** | **A** |
| **1** | stop | stop | stop | stop | stop | stop | stop | stop |
| **2** | stop | stop | stop | stop | stop | stop | stop | stop |
| **3** | stop | stop | stop | stop | stop | stop | stop | stop |
| **4** | stop | stop | stop | stop | stop | stop | stop | stop |
| **5** | stop | stop | stop | stop | stop | stop | stop | stop |
| **6** | stop | stop | stop | stop | stop | stop | stop | stop |
| **7** | stop | stop | stop | stop | stop | stop | stop | stop |
| **8** | stop | stop | stop | stop | stop | stop | stop | stop |
| **9** | stop | stop | stop | stop | stop | stop | stop | stop |
| **10** | stop | stop | stop | stop | stop | stop | stop | stop |

Ainsi, la composition comparative n'a pas montré de protection contre les piqûres de moustique *Aedes aegypti* en conditions de laboratoire.

La composition comparative n'est pas du tout efficace pour traiter un matériau textile afin de lui conférer des propriétés répulsives contre des moustiques.

## Revendications

1. Composition répulsive sous forme de spray, **caractérisée en ce qu'**elle comprend au moins :
- des microcapsules comprenant un noyau enrobé d'une membrane, ledit noyau contenant au moins des principes actifs répulsifs qui comprennent au moins de l'huile essentielle de lavandin et du p-menthane-3,8-diol ;
- au moins un agent liant ;
- au moins un agent mouillant ;
- de l'eau.

2. Composition répulsive selon la revendication 1, **caractérisée en ce que** les microcapsules comprennent par rapport à la masse totale des principes actifs qu'elles contiennent :
- entre 5 et 50 %, de préférence entre 5 et 10%, en masse d'huile essentielle de lavandin ;
- entre 1 et 95 %, de préférence entre 50 et 95 %, en masse de p-menthane-3,8-diol.

3. Composition répulsive selon l'une quelconque des revendications 1 à 2, **caractérisée en ce que** le noyau des microcapsules comprend en outre au moins un composé choisi parmi les parfums, les désodorisants, les hydratants pour la peau, les vitamines, les colorants, les pigments, les antioxydants, les acides, les bases, les agents de blanchiment, les peroxydes, les adhésifs, les catalyseurs, les huiles cosmétiques, les extraits de plantes ou d'algues, les agents adoucissants, les agents hydrofuges, les molécules biocides, les insectifuges, les agents calorifuges, les retardateurs de flamme et les agents bactériostatiques.

4. Composition répulsive selon l'une quelconque des revendications 1 à 3, **caractérisée en ce que** la membrane des microcapsules est réalisée en au moins un matériau choisi parmi la gélatine, le silicone, les polyamides, les polyuréthanes, les polyoléfines, les protéines, les lipides, la cellulose et ses dérivés, les polysaccharides, les chitosans, les résines aminoplastes telles que l'urée-formaldéhyde et la mélamine-formaldéhyde, les gommes, les polyacrylates, les polystyrènes et les polyesters.

5. Composition répulsive selon l'une quelconque des revendications 1 à 4, **caractérisée en ce que** l'agent liant est un copolymère de polyvinylpyrrolidone-vinylacétate.

6. Composition répulsive selon l'une quelconque des revendications 1 à 5, **caractérisée en ce que** l'agent mouillant est un alcool gras éthoxylé.

7. Composition répulsive selon l'une quelconque des revendications 1 à 6, **caractérisée en ce qu'**elle comprend par rapport à la masse totale de ladite composition :
- entre 1 et 30%, de préférence entre 2,5% et 20%, de microcapsules comprenant un noyau enrobé d'une membrane, ledit noyau contenant au moins des principes actifs répulsifs qui comprennent au moins de l'huile essentielle de lavandin et du p-menthane-3,8-diol ;
- entre 0,5% et 50%, de préférence entre 1% et 10%, d'au moins un agent liant ;
- entre 0,1% et 50%, de préférence entre 2% et 20%, d'au moins un agent mouillant ;
- optionnellement entre 0,1% et 10%, de préférence entre 0,1% et 2%, d'au moins un agent conservateur ;
- qsp d'eau.

8. Procédé de traitement répulsif d'insectes vecteurs d'une maladie tropicale, d'acariens, de poux ou de puces de lit, d'un matériau textile, **caractérisé en ce qu'**on pulvérise sur au moins une partie d'un matériau textile au moins une composition répulsive selon l'une quelconque des revendications 1 à 7.

9. Procédé de traitement répulsif selon la revendication 8, **caractérisé en ce qu'**on pulvérise entre 0,01 et 5 g/m², de préférence entre 0,01 et 1 g/m², de composition répulsive selon l'une quelconque des revendications 1 à 7 sur ledit matériau textile.

10. Procédé de traitement répulsif selon l'une quelconque des revendications 8 à 9, **caractérisé en ce que** ledit matériau textile est choisi parmi les vêtements, les pièces de literie ou d'ameublement, les housses de rangement et les moustiquaires.

## Patentansprüche

1. Abwehrmittelzusammensetzung in Form eines Sprays, **dadurch gekennzeichnet, dass** es mindestens Folgendes umfasst:
- Mikrokapseln, die aus einem mit einer Membran beschichteten Kern bestehen, wobei der Kern mindestens aktive abweisende Bestandteile enthält, die mindestens ätherisches Lavandinöl und p-Menthan-3,8-diol umfassen;
- mindestens ein Bindemittel;
- mindestens ein Netzmittel;
- Wasser.

2. Abwehrmittelzusammensetzung nach Anspruch 1, **dadurch gekennzeichnet, dass** die Mikrokapseln bezogen auf die Gesamtmasse der in ihnen enthaltenen Bestandteile Folgendes umfassen:
- zwischen 5 und 50 Masse-%, vorzugsweise zwischen 5 und 10 Masse-%, ätherisches Lavandinöl;
- zwischen 1 und 95 Masse-%, vorzugsweise zwischen 50 und 95 Masse-%, p-Menthan-3,8-diol.

3. Abwehrmittelzusammensetzung nach einem der Ansprüche 1 bis 2, **dadurch gekennzeichnet, dass** der Kern der Mikrokapseln außerdem mindestens eine Verbindung umfasst, die aus Parfümen, Deodorants, Hautfeuchtigkeitsmitteln, Vitaminen, Farbstoffen, Pigmenten, Antioxidantien, Säuren, Basen, Bleichmitteln, Peroxiden, Klebstoffen, Katalysatoren, kosmetischen Ölen, Pflanzen- oder Algenextrakten, Weichmachern, wasserabweisenden Mitteln, bioziden Molekülen, Insektenschutzmitteln, wärmeisolierenden Mitteln, Flammschutzmitteln und bakteriostatischen Mitteln ausgewählt ist.

4. Abwehrmittelzusammensetzung nach einem der Ansprüche 1 bis 3, **dadurch gekennzeichnet, dass** die Membran der Mikrokapseln aus mindestens einem Material besteht, das aus Gelatine, Silikon, Polyamiden, Polyurethanen, Polyolefinen, Proteinen, Lipiden, Cellulose und ihren Derivaten, Polysacchariden, Chitosanen, Aminoplastharzen wie Harnstoff-Formaldehyd und Melamin-Formaldehyd, Gummis, Polyacrylaten, Polystyrolen und Polyestern ausgewählt ist.

5. Abwehrmittelzusammensetzung nach einem der Ansprüche 1 bis 4, **dadurch gekennzeichnet, dass** das Bindemittel ein Copolymer aus Polyvinylpyrrolidon-Vinylacetat ist.

6. Abwehrmittelzusammensetzung nach einem der Ansprüche 1 bis 5, **dadurch gekennzeichnet, dass** das Netzmittel ein ethoxylierter Fettalkohol ist.

7. Abwehrmittelzusammensetzung nach einem der Ansprüche 1 bis 6, **dadurch gekennzeichnet, dass** sie bezogen auf die Gesamtmasse der Zusammensetzung Folgendes umfasst:
- zwischen 1 % und 30 %, vorzugsweise zwischen 2,5 % und 20 %, Mikrokapseln, die aus einem mit einer Membran beschichteten Kern bestehen, wobei der Kern mindestens aktive abweisende Bestandteile enthält, die mindestens ätherisches Lavandinöl und p-Menthan-3,8-diol umfassen;
- zwischen 0,5% und 50 %, vorzugsweise zwischen 1 % und 10 %, mindestens eines Bindemittels;
- zwischen 0,1 % und 50 %, vorzugsweise zwischen 2 % und 20 %, mindestens eines Netzmittels;
- optional zwischen 0,1 % und 10 %, vorzugsweise zwischen 0,1 % und 2 %, mindestens eines Konservierungsmittels;
- qsp Wasser.

8. Verfahren zur Behandlung eines Textilmaterials zur Abwehr von Insekten, die eine Tropenkrankheit übertragen, von Milben, Läusen oder Bettflöhen, **dadurch gekennzeichnet, dass** mindestens ein Teil eines Textilmaterials mit mindestens einer Abwehrmittelzusammensetzung nach einem der Ansprüche 1 bis 7 besprüht ist.

9. Verfahren zur Abwehrbehandlung nach Anspruch 8, **dadurch gekennzeichnet, dass** zwischen 0,01 und 5 g/m², vorzugsweise zwischen 0,01 und 1 g/m², der Abwehrmittelzusammensetzung nach einem der Ansprüche 1 bis 7 auf das Textilmaterial gesprüht wird.

10. Verfahren zur Abwehrbehandlung nach einem der Ansprüche 8 bis 9, **dadurch gekennzeichnet, dass** das Textilmaterial aus Kleidung, Bettzeug oder Möbelstücken, Aufbewahrungshüllen und Moskitonetzen ausgewählt wird.

## Claims

1. A repellent composition in a form of spray, **characterized in that** it comprises at least:
- microcapsules comprising a core coated with a membrane, said core containing at least repellent active ingredients which comprise at least lavandin essential oil and p-menthane-3,8-diol;
- at least one binding agent;
- at least one wetting agent;
- water.

2. The repellent composition according to claim 1, **characterized in that** the microcapsules comprise, relative to the total mass of the active ingredients which they contain:
- between 5 and 50%, preferably between 5 and 10%, by mass of lavandin essential oil;
- between 1 and 95%, preferably between 50 and 95%, by mass of p-menthane-3,8-diol.

3. The repellent composition according to any one of claims 1 and 2, **characterized in that** the core of the microcapsules further comprises at least one compound chosen from perfumes, deodorants, skin moisturizers, vitamins, dyes, pigments, antioxidants, acids, bases, bleaching agents, peroxides, adhesives, catalysts, cosmetic oils, plant or seaweed extracts, softening agents, water repellent agents, biocidal molecules, insect repellents, heat-insulating agents, flame retardants and bacteriostatic agents.

4. The repellent composition according to any one of claims 1 to 3, **characterized in that** the membrane of the microcapsules is made of at least one material chosen from gelatin, silicone, polyamides, polyurethanes, polyolefins, proteins, lipids, cellulose and its derivatives, polysaccharides, chitosans, aminoplast resins such as urea-formaldehyde and melamine-formaldehyde, gums, polyacrylates, polystyrenes and polyesters.

5. The repellent composition according to any one of claims 1 to 4, **characterized in that** the binding agent is a polyvinylpyrrolidone-vinylacetate copolymer.

6. The repellent composition according to any one of claims 1 to 5, **characterized in that** the wetting agent is an ethoxylated fatty alcohol.

7. The repellent composition according to any one of claims 1 to 6, **characterized in that** it comprises, relative to the total mass of said composition:
- between 1 and 30%, preferably between 2.5% and 20%, of microcapsules comprising a core coated with a membrane, said core containing at least repellent active ingredients which comprise at least lavandin essential oil and p-menthane-3,8-diol;
- between 0.5% and 50%, preferably between 1% and 10%, of at least one binding agent;
- between 0.1% and 50%, preferably between 2% and 20%, of at least one wetting agent;
- optionally between 0.1% and 10%, preferably between 0.1% and 2%, of at least one preserving agent;
- qsp water.

8. A method for the repellent treatment of insect vectors of a tropical disease, mites, lice or bed bugs, of a textile material, **characterized in that** at least one repellent composition according to any one of claims 1 to 7 is sprayed on at least a part of a textile material.

9. The repellent treatment method according to claim 8, **characterized in that** between 0.01 and 5 g/m², preferably between 0.01 and 1 g/m², of repellent composition according to any one of claims 1 to 7 is sprayed on said textile material.

10. The repellent treatment method according to any one of claims 8 and 9, **characterized in that** said textile material is chosen from clothing, parts of bedding or furniture, storage covers and mosquito nets.
